Europäisches Patentamt

European Patent Office

Office européen des brevets

(19)

(11)  **EP 1 172 537 A1**

(12)  # DEMANDE DE BREVET EUROPEEN

(43) Date de publication:
**16.01.2002   Bulletin 2002/03**

(51) Int Cl.⁷: **F01N 9/00**, F01N 3/023,
F01N 3/28, F01N 11/00,
F02D 41/14, F02D 41/40

(21) Numéro de dépôt: **01401854.3**

(22) Date de dépôt: **11.07.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **11.07.2000  FR 0009040**

(71) Demandeur: **Renault
92100 Boulogne Billancourt (FR)**

(72) Inventeurs:
• **Archimbaud, Marie-Laure
  75010 Paris (FR)**
• **Hekimian, Georges
  92300 Levallois (FR)**
• **Col, Gabriel
  78000 Versailles (FR)**
• **Dorlhene, Pascal
  91180 Saint Germain les Arpajon (FR)**
• **Dionnet, Bernard
  91150 Morigny (FR)**

(54)   **Procédé et dispositif de commande de la régénération d'un filtre à particules placé dans la ligne d'échappement d'un moteur à combustion interne**

(57)   Suivant l'invention, on mesure la perte de charge des gaz d'échappement dans le filtre (3) et on déclenche une régénération du filtre (3) quand ladite perte de charge dépasse un seuil ($\Delta P_s$) prédéterminé, fonction du point de fonctionnement du moteur. On surveille la concentration des gaz d'échappement en monoxyde de carbone (CO), à la sortie du filtre (3) pendant ladite régénération et on arrête celle-ci quand cette concentration retombe en-dessous d'un niveau prédéterminé.

Application à un moteur Diesel.

FIG.: 1

EP 1 172 537 A1

**Description**

La présente invention est relative à un procédé de commande de la régénération d'un filtre à particules placé dans la ligne d'échappement d'un moteur à combustion interne, et, plus particulièrement, un tel procédé suivant lequel :

a) on mesure la perte de charge des gaz d'échappement dans le filtre et

b) on déclenche une régénération du filtre, par combustion de suies, quand ladite perte de charge dépasse un seuil prédéterminé, fonction du point de fonctionnement du moteur.

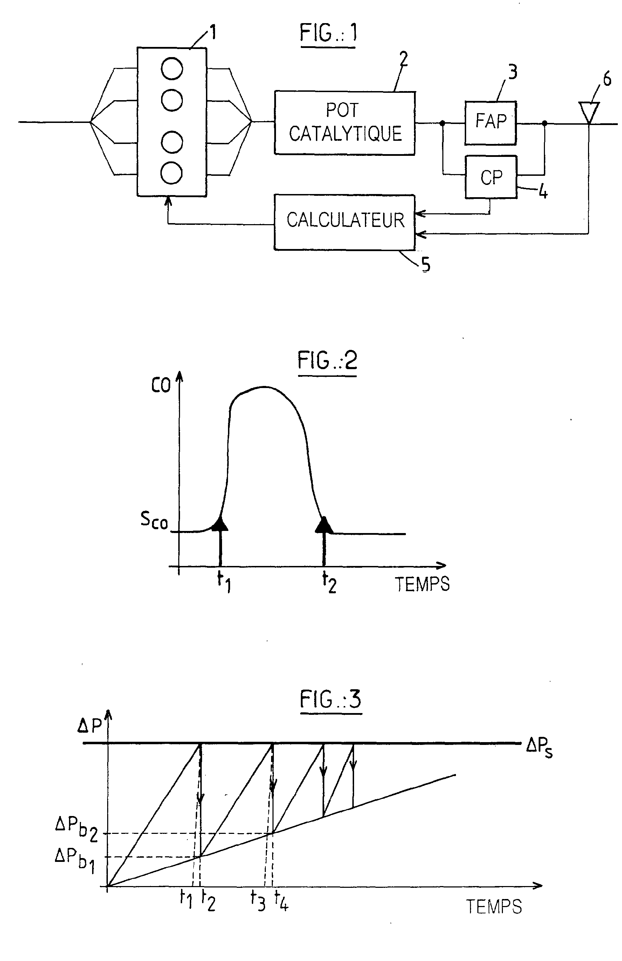

On a représenté schématiquement à la figure 1 du dessin annexé la ligne d'échappement d'un moteur à combustion interne 1, plus particulièrement du type Diesel. Celle-ci comprend classiquement un pot catalytique 2 d'oxydation des espèces chimiques imbrûlées sortant du moteur et un filtre 3 conçu pour retenir, notamment, des particules de suie également imbrûlées, portées par les gaz d'échappement du moteur.

Ce filtre s'encrassant progressivement sous l'effet de l'accumulation des suies et d'autres résidus, d'huile, d'additifs, de carburant, etc..., il est nécessaire de prévoir des moyens de décolmatage de ce filtre, mis en oeuvre périodiquement. Ces moyens comprennent couramment un capteur de pression différentielle 4 placé aux bornes du filtre à particules 3 pour délivrer à un calculateur 5 de gestion du moteur 1 un signal représentatif de la pression différentielle mesurée, correspondant à la perte de charge des gaz d'échappement pendant la traversée du filtre, cette perte de charge étant d'autant plus forte que l'encrassement du filtre est plus avancé.

Au franchissement d'un seuil par cette perte de charge, le calculateur 5 déclenche une régénération du filtre par combustion des particules de suie retenues dans le filtre. Pour ce faire il faut accroître la température des gaz d'échappement passant dans le filtre, à l'aide d'un brûleur par exemple. On peut aussi provoquer un accroissement de la température des gaz sortant du moteur par une commande appropriée du point de fonctionnement de celui-ci (réduction de l'angle d'avance à l'allumage, retardement de l'ouverture des injecteurs de carburant) ou par une commande d'organes périphériques (papillon de réglage du débit d'air entrant dans le moteur, vanne de commande de recirculation des gaz d'échappement dans ce moteur, etc...).

Une telle régénération, commandée sur dépassement d'un seuil fonction du point de fonctionnement du moteur (pression d'admission, régime) est ainsi déclenchée périodiquement par le calculateur 5 puis arrêtée par celui-ci sur détection d'un retour de la perte de charge dans le filtre en-dessous d'un seuil, ou, si la ligne d'échappement est équipée d'un capteur de température des gaz en aval du filtre, sur détection du passage d'un pic de température, significatif de ce que la quantité de suie en combustion dans le filtre se réduit.

L'arrêt de la régénération du filtre sur observation de l'évolution de la perte de charge dans le filtre ou de la température des gaz en aval du filtre n'est cependant pas sans inconvénient. En effet si le capteur de pression permet de mesurer correctement le chargement en suies du filtre, il ne rend pas compte fidèlement de la cinétique de combustion de ces suies : quelques canaux débouchés du filtre peuvent faire chuter considérablement la perte de charge dans le filtre, alors même que ce dernier contient encore une grande quantité de suies à brûler.

De même un capteur de température rend compte du niveau de combustion mais ne rend pas compte de la masse des suies en train de brûler.

La présente invention a précisément pour but de fournir un procédé de commande de la régénération d'un filtre à particules qui ne présente pas les inconvénients mentionnés ci-dessus.

On atteint ce but de l'invention, ainsi que d'autres qui apparaîtront à la lecture de la description qui va suivre, avec un procédé de commande de la régénération d'un filtre à particules placé dans la ligne d'échappement d'un moteur à combustion interne, du type décrit en préambule de la présente description, remarquable en ce qu'on surveille la concentration des gaz d'échappement en monoxyde de carbone, à la sortie du filtre, pendant la régénération et on arrête celle-ci quand cette concentration retombe en-dessous d'un niveau prédéterminé.

Comme on le verra plus loin en détail, la durée de la régénération du filtre peut être ajustée avec plus de précision que dans la technique antérieure, car la quantité de monoxyde de carbone contenue dans les gaz d'échappement pendant cette régénération est directement liée à la masse des suies brûlées dans le filtre, contrairement à la perte de charge où à la température des gaz, qui sont des grandeurs indirectement liées seulement à cette masse en combustion.

Selon une autre caractéristique du procédé suivant la présente invention, on évalue la masse des suies brûlées pendant chacune des régénérations successives d'une suite de telles régénérations et on en déduit un diagnostic quant à l'opportunité d'un remplacement du filtre.

On peut déclencher une régénération du filtre en retardant l'injection du carburant dans les cylindres du moteur.

Suivant encore une autre caractéristique du procédé selon l'invention, on procède à un diagnostic du fonctionnement d'un pot catalytique d'oxydation des gaz d'échappement placé entre le moteur et le filtre, hors des temps de régénération du filtre, en des points de fonctionnement prédéterminés du moteur.

D'autres caractéristiques et avantages de la présente invention apparaîtront à la lecture de la description qui va suivre et à l'examen du dessin annexé dans lequel :

- la figure 1 est un schéma d'un dispositif pour la mise en oeuvre du procédé selon l'invention, déjà partiellement décrit en préambule de la présente description,
- la figure 2 est un graphe de l'évolution de la concentration en monoxyde de carbone des gaz d'échappement pendant une régénération du filtre, commandée selon le procédé suivant la présente invention, et
- la figure 3 est une graphe de l'évolution de la pression différentielle, ou perte de charge, aux bornes du filtre du dispositif de la figure 1, lors d'une suite de régénérations successives de ce filtre par le procédé suivant l'invention.

Sur le schéma du dispositif selon l'invention représenté à la figure 1, il apparaît que celui-ci comprend, disposés dans cet ordre sur la ligne d'échappement du moteur 1, le pot catalytique 2 (d'oxydation dans le cas d'un moteur Diesel), le filtre à particules (FAP) 3 et, suivant la présente invention, un capteur "de gaz" 6 placé immédiatement en aval du filtre 3. Le capteur 6 est sensible à la concentration en espèces chimiques réductrices (hydrocarbures HC, monoxyde de carbone CO) des gaz d'échappement. Il délivre au calculateur 5 un signal représentatif de cette concentration.

C'est ainsi que, lorsqu'on déclenche une combustion des suies contenues dans le filtre 3 pour régénérer ce filtre, la combustion de ces suies selon la réaction :

$$(x+y)C + (x/2+y)O_2 \rightarrow xCO + yCO_2$$

provoque la présence d'un surcroît de monoxyde de carbone CO dans les gaz d'échappement du moteur, surcroît qui se traduit par un pic du signal délivré par le capteur 6, comme représenté à la figure 2 du dessin annexé.

La régénération ayant été déclenchée à l'instant $t_1$, sur détection d'un franchissement d'un seuil haut prédéterminé par la pression différentielle, ou perte de charge, observée aux bornes du filtre 3 par le capteur 4, la concentration en oxyde de carbone des gaz d'échappement mesurée par le capteur de gaz 6 croît avec la quantité de suies brûlées, passe par un pic et décroît pour revenir (à l'instant $t_2$) à son niveau antérieur à la régénération, quand la combustion des suies dans le filtre 3 cesse.

Comme on l'a vu plus haut, divers moyens peuvent être utilisés pour accroître la température des gaz d'échappement du moteur, ce qui est nécessaire à l'obtention de la combustion des suies accumulées dans le filtre 3. Suivant un mode de mise en oeuvre préféré de la présente invention, on utilise pour ce faire une commande retardée de l'ouverture d'injecteurs de carburant dans le moteur, impliquant une augmentation de la quantité de carburant injecté pour maintenir le couple délivré par le moteur. Une telle injection retardée permet d'obtenir l'accroissement de température des gaz d'échappement nécessaire. Pendant la régénération, le calculateur 5 surveille l'évolution du signal délivré par le capteur de gaz 6 et ramène l'alimentation en carburant du moteur à l'état antérieur à la régénération, dès que le pic d'émission de monoxyde de carbone est franchi (la concentration en monoxyde de carbone retombe en-dessous de sa valeur maximale), la régénération s'achevant grâce à l'inertie thermique du filtre à particules 3. Ceci permet avantageusement de réduire la surconsommation en carburant entraînée par la régénération du filtre 3 suivant la stratégie décrite ci-dessus.

Le graphe de la figure 3 illustre schématiquement l'évolution de la perte de charge dans le filtre 4 lors d'une mise en oeuvre typique du procédé suivant l'invention, qui implique des régénérations périodiques successives du filtre, déclenchées quand le capteur de pression différentielle 4 relève des dépassements d'un seuil $\Delta P_s$. Pour simplifier, le seuil $\Delta P_s$ est considéré comme constant alors qu'en fait il est fonction du point de fonctionnement du moteur (pression d'admission, régime, etc...) comme on l'a vu plus haut.

En partant d'un filtre 3 neuf, la pression $\Delta P$ croit avec le chargement en suies du filtre jusqu'à atteindre (à l'instant $t_1$) le seuil $\Delta P_s$ qui provoque la commande d'une régénération du filtre 3, par combustion de ces suies. Toutes les suies, et autres résidus, contenus dans le filtre ne peuvent, en pratique, être brûlés et la pression $\Delta P$ redescend à une valeur $\Delta P_{b1}$ (à l'instant $t_2$) et non à 0, à la fin de la régénération. Le filtre recommence à se charger en suies jusqu'à l'instant $t_3$ où une nouvelle régénération ramène $\Delta P$ (à l'instant $t_4$) à une valeur $\Delta P_{b2} > \Delta P_{b1}$, et ainsi de suite. On constate une croissance régulière du seuil bas de $\Delta P$.

Il convient évidemment de procéder au changement du filtre bien avant que celui-ci ne puisse plus être suffisamment décolmaté par le procédé suivant l'invention. Pour ce faire le calculateur 5 peut être dûment programmé de manière à intégrer, lors des régénérations successives, le signal (voir figure 2) délivré par le capteur de gaz 6, pour en tirer une mesure de la masse de suies brûlées, proportionnelle à la surface hachurée de la figure 2. Par soustractions successives de cette masse, de celle brûlée lors du premier décolmatage du filtre, on peut diagnostiquer, sur l'évolution de la différence ainsi mesurée, l'imminence d'un colmatage complet du filtre. Ce diagnostic peut déclencher, par exemple, l'allumage d'un voyant sur le tableau de bord du véhicule, propre à alerter le conducteur de ce véhicule sur l'urgence d'un remplacement du filtre.

Comme on l'a vu plus haut, le capteur de gaz 6 est placé en aval à la fois du pot catalytique 2 et du filtre à particules 3. Cette disposition présente deux avantages:

1) elle permet de protéger le capteur 6 des particules de suies, qui sont arrêtées par le filtre,
2) elle autorise l'utilisation du capteur de gaz pour établir un diagnostic de bon fonctionnement du pot catalytique 2 lui-même.

En effet, en dehors des temps de régénération du filtre à particules, celui-ci n'influence en rien la concentration des gaz d'échappement en espèces chimiques réductrices telles que les hydrocarbures HC et le monoxyde de carbone, que le pot 2 a pour fonction d'oxyder en espèces chimiques moins nocives ($CO_2$, $H_2O$).

En observant le signal délivré par le capteur de gaz 6 (alors sensible à la concentration des gaz d'échappement à la fois en hydrocarbures imbrûlés et en monoxyde de carbone), en dehors des périodes de régénération du filtre, en des points de fonctionnement dont on connaît les émissions de gaz de référence, on peut établir un diagnostic quant à l'état de fonctionnement du pot catalytique chargé de traiter ces émissions.

Il apparaît maintenant que l'invention permet bien d'obtenir les avantages annoncés, à savoir assurer une commande précise des régénérations successives d'un filtre à particules, basée sur la connaissance d'une grandeur, la concentration en monoxyde de carbone des gaz d'échappement, directement liée à la masse des particules de suie brûlées pendant la régénération. Elle fournit aussi un dispositif qui permet de diagnostiquer l'état de fonctionnement du filtre aussi bien que celui d'un pot catalytique placé en amont, le filtre protégeant le capteur de gaz utilisé à cet effet. La position du capteur, en aval du filtre permet aussi d'isoler celui-ci des variations de pression observées en amont du filtre, ce qui est avantageux quand le capteur utilisé est sensible aux variations de pression.

On notera aussi que l'utilisation éventuelle d'un capteur de gaz chauffé pour fixer son point de fonctionnement, permet de déduire la température des gaz d'échappement, en aval du capteur, de la quantité de chaleur qui lui est fournie. Cette connaissance de la température en sortie de filtre, pendant et après la régénération, permet de poser un diagnostic sur les conditions mêmes de cette régénération. A titre d'exemple, si l'élévation de la température notée pendant la régénération est excessivement rapide et si la température atteint une valeur trop élevée, par exemple supérieure à 1000°C, on peut craindre une détérioration du filtre à particules soumis à une telle température et commander alors l'émission d'un signal d'alerte incitant le conducteur du véhicule à remplacer le filtre au plus tôt.

Bien entendu l'invention n'est pas limitée au mode de réalisation et représenté qui n'a été donné qu'à titre d'exemple. C'est ainsi que l'invention n'est pas limitée à la régénération d'un filtre à particules placé dans la ligne d'échappement d'un moteur Diesel et s'étend aussi bien à un filtre placé dans la ligne d'échappement d'un moteur à essence.

**Revendications**

1. Procédé de commande de la régénération d'un filtre à particules (3) placé dans la ligne d'échappement d'un moteur à combustion interne (1), suivant lequel :

   a) on mesure la perte de charge des gaz d'échappement dans le filtre (3),
   b) on déclenche une régénération du filtre (3), par combustion de suies, quand ladite perte de charge dépasse un seuil ($\Delta P_s$) prédéterminé, fonction du point de fonctionnement du moteur,

   **caractérisé en ce qu'**on surveille la concentration des gaz d'échappement en monoxyde de carbone (CO), à la sortie du filtre (3) pendant ladite régénération et on arrête celle-ci quand cette concentration retombe en-dessous d'un niveau prédéterminé.

2. Procédé conforme à la revendication 1, **caractérisé en ce qu'**on évalue la masse des suies brûlées pendant chacune des régénérations successives d'une suite de telles régénérations et on en déduit un diagnostic quant à l'opportunité d'un remplacement dudit filtre (3).

3. Procédé conforme à l'une quelconque des revendications 1 et 2, **caractérisé en ce qu'**on déclenche une régénération en retardant l'injection de carburant dans les cylindres du moteur (1).

4. Procédé conforme à l'une quelconque des revendications précédentes, **caractérisé en ce qu'**on procède à un diagnostic du fonctionnement d'un pot catalytique d'oxydation (2) placé dans la ligne d'échappement entre ledit moteur (1) et ledit filtre (3), hors des temps de régénération du filtre, en des points de fonctionnement prédéterminés du moteur.

5. Dispositif pour la mise en oeuvre du procédé conforme à l'une quelconque des revendications 1 à 4, pour la régénération d'un filtre à particules (3) placé dans la ligne d'échappement d'un moteur (1) à combustion interne, **caractérisé en ce qu'**il comprend un capteur de pression différentielle (4) placé aux bornes dudit filtre (3), un capteur de gaz (6) placé en aval dudit filtre (3), dans ladite ligne d'échappement, pour être sensible à la concentration des gaz d'échappement en espèces chimiques réductrices (HC, CO) et des moyens (5) sensibles au signal délivré par ledit capteur de pression différentielle (4) pour déclencher une régénération du filtre par élévation de la température des gaz d'échappement du moteur, quand ladite pression dépasse un seuil ($\Delta P_s$) prédéterminé, fonction du point de fonctionnement du moteur (1), ces moyens (5) étant sensibles au signal délivré par ledit capteur de gaz (6) pour arrêter ladite régénération quand la concentration en monoxyde de carbone (CO) desdits gaz retombe en-dessous d'un niveau prédéterminé.

6. Dispositif conforme à la revendication 5, **caractérisé en ce que** lesdits moyens (5) retardent l'injection de carburant dans ledit moteur (1) pour provoquer ladite élévation de la température desdits gaz d'échappement.

7. Dispositif conforme à la revendication 5 ou 6, **caractérisé en ce que** lesdits moyens (5) pour déclencher et arrêter une régénération dudit filtre (3) sont intégrés à un calculateur de gestion dudit moteur (1).

FIG.: 1

FIG.: 2

FIG.: 3

**Office européen des brevets**

# RAPPORT DE RECHERCHE EUROPEENNE

Numéro de la demande

EP 01 40 1854

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 774 421 A (PEUGEOT) 6 août 1999 (1999-08-06) * page 4, ligne 25 - page 5, ligne 24; figure 1 * --- | 1-3,5-7 | F01N9/00 F01N3/023 F01N3/28 F01N11/00 F02D41/14 F02D41/40 |
| A | US 5 822 979 A (HAMBURG DOUGLAS RAY ET AL) 20 octobre 1998 (1998-10-20) * abrégé; figure 1 * ----- | 1 | |

**DOMAINES TECHNIQUES RECHERCHES (Int.Cl.7)**

F01N
F02D

Le présent rapport a été établi pour toutes les revendications

| Lieu de la recherche | Date d'achèvement de la recherche | Examinateur |
|---|---|---|
| LA HAYE | 13 novembre 2001 | Schmitter, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 01 40 1854

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2001

| Document brevet cité au rapport de recherche | | Date de publication | Membre(s) de la famille de brevet(s) | | Date de publication |
|---|---|---|---|---|---|
| FR 2774421 | A | 06-08-1999 | FR | 2774421 A1 | 06-08-1999 |
| US 5822979 | A | 20-10-1998 | DE | 19758154 A1 | 27-08-1998 |
| | | | JP | 10238337 A | 08-09-1998 |

EPO FORM P0460

Pour tout renseignement concernant cette annexe : voir Journal Officiel de l'Office européen des brevets, No.12/82